# EUROPEAN PATENT SPECIFICATION

(11) **EP 2 806 487 B1**
(45) Date of publication and mention of the grant of the patent: **25.05.2016**
(21) Application number: 13825694.6
(22) Date of filing: 02.08.2013
(51) Int. Cl.: H01M 4/58, H01M 4/525, H01M 4/505, H01M 4/36, H01M 4/62, H01M 10/052

(54) **MIXED CATHODE ACTIVE MATERIAL HAVING IMPROVED OUTPUT CHARACTERISTICS AND LITHIUM SECONDARY BATTERY INCLUDING SAME**
MISCHKATHODENAKTIVMATERIAL MIT VERBESSERTEN AUSGABEEIGENSCHAFTEN UND LITHIUM-SEKUNDÄRBATTERIE DAMIT
MATÉRIAU ACTIF COMPOSITE DE CATHODE PRÉSENTANT DES CARACTÉRISTIQUES DE SORTIE AMÉLIORÉES ET BATTERIE RECHARGEABLE AU LITHIUM LE COMPRENANT

(30) Priority: 02.08.2012 KR 20120084757
(43) Date of publication of application: 26.11.2014
(73) Proprietor: LG Chem, Ltd., Seoul 150-721 (KR)
(72) Inventor: OH, Song Taek, Daejeon 305-738 (KR); LEE, Sang Uck, Daejeon 305-738 (KR); KIM, Il Hong, Daejeon 305-738 (KR)
(74) Representative: Goddar, Heinz J.
(86) International application number: PCT/KR2013/007008
(87) International publication number: WO 2014/021685

(56) References cited:
- WO-A1-2013/016426
- KR-A- 20070 083 550
- KR-A- 20080 031 616
- KR-A- 20080 109 298
- KR-A- 20110 097 719
- KR-B1- 101 139 972
- US-A1- 2006 216 605
- US-A1- 2010 248 038
- US-A1- 2011 223 482

## Description

### TECHNICAL FIELD

The present invention relates to a mixed cathode active material having improved power characteristics and a lithium secondary battery including the same, and more particularly, to a mixed cathode active material which may reduce the difference in operating voltage with respect to layered-structure lithium transition metal oxide and may consequently minimize power reduction in a transient region by using LiFePO₄ (LFP) having a portion of iron (Fe) substituted with other elements, such as manganese (Mn), in order to prevent a rapid voltage drop in the transient region when layered-structure lithium transition metal oxide and olivine-structured lithium oxide (e.g., LFP) are blended, and a lithium secondary battery including the mixed cathode active material.

### BACKGROUND ART

Recently, lithium secondary batteries have been used in various fields including portable electronic devices, such as mobile phones, personal digital assistants (PDAs), and laptop computers. In particular, in line with growing concerns about environmental issues, research into lithium secondary batteries having high energy density and discharge voltage as a power source of an electric vehicle, which may replace vehicles using fossil fuels such as gasoline vehicle and diesel vehicle, one of major causes of air pollution, has been actively conducted and some of the research are in a commercialization stage. In order to use a lithium secondary battery as a power source of the electric vehicle, the lithium secondary battery must maintain stable power in a usable state of charge (SOC) range along with high power.

An electric vehicle is classified as a typical electric vehicle (EV), battery electric vehicle (BEV), hybrid electric vehicle (HEV), or plug-in hybrid electric vehicle (PHEV) according to a power source thereof.

The HEV among the above electric vehicles, as a vehicle obtaining a driving force from the combination of typical internal combustion engine (engine) and electric battery, has a mode, in which the driving force is mainly obtained through the engine while the battery assists insufficient power of the engine only in the case of requiring more power than a typical case, such as uphill driving, and the SOC is recovered again through charging the battery during the stop of the vehicle. That is, the engine is a primary power source in the HEV, and the battery, as an auxiliary power source, is only used intermittently.

The PHEV, as a vehicle obtaining a driving force from the combination of engine and battery rechargeable by being connected to an external power supply, is broadly classified as a parallel-type PHEV and a series-type PHEV.

In the parallel-type PHEV, the engine and the battery are in an equivalent relationship to each other as a power source and the engine or the battery may alternatingly act as a primary power source according to the situation. That is, the parallel-type PHEV is operated in a mutually parallel mode, in which the battery makes up for insufficient power of the engine when the engine becomes a primary power source and the engine makes up for insufficient power of the battery when the battery becomes a primary power source.

However, the series-type PHEV is a vehicle basically driven only by a battery, in which an engine only acts to charge the battery. Therefore, since the series-type PHEV, differing from the HEV or the parallel-type PHEV, entirely depends on the battery rather than the engine in terms of driving of the vehicle, maintaining of stable power according to battery characteristics in a usable SOC range becomes a very important factor for driving safety in comparison to other types of electric vehicles.

With respect to LiCoO₂, as a typical cathode material of a high-capacity lithium secondary battery, practical limits of an increase in energy density and power characteristics have been reached. In particular, when LiCoO₂ is used in high energy density applications, oxygen in a structure of LiCoO₂ is discharged along with structural degeneration in a high-temperature charged state due to its structural instability to generate an exothermic reaction with an electrolyte in a battery, and thus, it becomes a main cause of battery explosion. In order to improve the safety limitation of LiCoO₂, the use of lithium-containing manganese oxides, such as LiMnO₂ having a layered crystal structure and LiMn₂O₄ having a spinel crystal structure, and lithium-containing nickel oxide (LiNiO₂) have been considered, and a great deal of research into using ternary metal oxide having a layered structure of nickel (Ni), cobalt (Co), and manganese (Mn) (hereinafter, simply referred to as "NMC") has recently been conducted.

The layered-structure ternary metal oxide (e.g., Li₁₊₃NiₓCo_{y}Mn_{1-x-y}O₂) exhibits high power in a high SOC range. However, since the power is rapidly decreased in a low SOC range (e.g., 30% SOC or less) (resistance is rapidly increased in a lower end range of SOC), a usable SOC range may be significantly limited. The same is also true for the case in which ternary metal oxide is blended with lithium manganese spinel for the safety of the cell. The reason for this is that an operating voltage of lithium manganese spinel is higher than NMC and thus, only the NMC operates alone in a low SOC range. The above limitation may only become a big obstacle in using NMC in areas in which power characteristics are critical, such as electric vehicles.

In particular, with respect to the series-type PHEV which entirely depends on the battery rather than the engine in terms of driving of the vehicle, different from the HEV in which the engine is a primary power source or the parallel-type PHEV in which the engine and the battery operate as equivalent power sources, it may be only used in a SOC range in which a required power level or more is maintained. However, in a case where the NMC is used alone as a cathode active material, since the power in a low SOC range is decreased, a usable SOC range may be significantly decreased.

In this respect, a method of mixing layered-structure lithium transition metal oxide, e.g., NMC, and olivine-structured lithium oxide, e.g., LiFePO₄ (hereinafter, simply referred to as "LFP") may be considered to improve safety and assist the power at a lower end of SOC.

However, in a case where the LFP is mixed with the NMC, the power may decrease according to a rapid voltage drop in a transient region (although different from a blending ratio, e.g., near 30% SOC when a weight ratio of NMC to LFP is 7:3) due to the difference between operating voltages of two materials.

US2011/223482 describes a mixed cathode active material comprising:a first cathode active material represented by LiNi_{0.45}Mn_{0.45}Co_{0.1}O₂ and a second cathode active material having an olivine structure that is represented by LiMn_{0.8}Fe_{0.2}PO₄.

Thus, with respect to a cathode material having layered-structure lithium transition metal oxide and olivine-structured lithium oxide mixed therein, there is an urgent need to develop a new cathode material capable of minimizing the power reduction in a transient region occurring due to the blending as well as securing safety and assisting the power at a lower end of SOC.

### DISCLOSURE OF THE INVENTION

### TECHNICAL PROBLEM

As a result of in-depth study and various experimentations, the inventors of the present application developed a mixed cathode active material which may minimize power reduction in a transient region by decreasing the difference in operating voltage with respect to layered-structure lithium transition metal oxide.

The present invention provides a mixed cathode active material having significantly improved power characteristics by minimizing the power reduction in a transient region.

The present invention also provides a lithium secondary battery including the mixed cathode active material.

### TECHNICAL SOLUTION

According to an aspect of the present invention, there is provided a mixed cathode active material as defined in claim 1.

According to another aspect of the present invention, there is provided a cathode including the mixed cathode active material, and a lithium secondary battery including the cathode.

### ADVANTAGEOUS EFFECTS

A mixed cathode active material according to the present invention is prepared by mixing a first cathode active material, as layered-structure lithium transition metal oxide (e.g., NMC), and a second cathode active material (also referred to as "LMFP") in which a portion of iron (Fe) in pure LFP is substituted with other elements such as manganese (Mn), wherein since the substituted LFP is used, the difference between operating voltages of two materials may be decreased in comparison to a case in which a rapid voltage drop may occur in a transient region due to the difference between operating voltages of two materials during blending of the layered-structure lithium transition metal oxide and the pure LFP. As a result, the present invention may provide a lithium secondary battery in which the power reduction in a transient region is minimized.

### BRIEF DESCRIPTION OF THE DRAWINGS

FIG. 1 illustrates current-voltage profiles of example and comparative example; and
FIG. 2 is a graph illustrating changes in power according to each SOC of lithium secondary batteries according to example and comparative example.

### MODE FOR CARRYING OUT THE INVENTION

Hereinafter, the present invention will be described in detail.

According to an aspect of the present disclosure, there is provided a mixed cathode active material including a first cathode active material as lithium transition metal oxide having a layered structure and a second cathode active material having an olivine structure that is represented by Chemical Formula 2 below:

[Chemical Formula 2] LiFe₁₋ₓMₓM_{y}'XO₄

where,
M is one, or two or more elements simultaneously among elements that belong to groups 7 and 9 to 12, and essentially comprises manganese (Mn);
M' is one, or two or more transition metal elements simultaneously among transition metal elements, and essentially comprises Mn;
X is one or more selected from the group consisting of phosphorous (P), silicon (Si), sulfur (S), arsenic (As), and antimony (Sb) (particularly, X = P);
0<x<1 (particularly, 0.1≤x≤0.5, more particularly, 0.1≤x≤0.3); and
0≤y<0.5 (particularly, y=0).

Any lithium transition metal oxide having a layered structure, including LCO, NMC, NCA, and Mn-rich (aLi₂MnO₃·(1-a)LiMO₂, where 0<a<1, and M is one or more selected from the group consisting of aluminum (Al), magnesium (Mg), Mn, nickel (Ni), cobalt (Co), chromium (Cr), vanadium (V), and iron (Fe)) may be used as the first cathode active material. However, the type thereof is not particularly limited.

For example, the first cathode active material may include one or more selected from the group consisting of layered-structure lithium cobalt oxide, lithium nickel oxide, lithium manganese oxide, lithium cobalt-nickel oxide, lithium cobalt-manganese oxide, lithium manganese-nickel oxide, lithium cobalt-nickel-manganese oxide, and oxides having other elements substituted or doped therein (where the other elements may be one or more selected from the group consisting of Al, Mg, Mn, Ni, Co, Fe, Cr, V, titanium (Ti), copper (Cu), boron (B), calcium (Ca), zinc (Zn), zirconium (Zr), niobium (Nb), molybdenum (Mo), strontium (Sr), Sb, tungsten (W), and bismuth (Bi)).

According to the present disclosure the first cathode active material may be layered-structure ternary lithium-containing metal oxide (NMC) represented by Chemical Formula 1 below:

[Chemical Formula 1] Li₁₊ₐNiₓMn_{y}Co_{z}O₂

where,
0≤a<0.5 (particularly, 0≤a≤0.2);
0<x<1 (particularly, 0.4≤x≤0.6);
0<y≤0.5 (particularly, 0.2≤y≤0.5);
0<z≤0.3 (particularly, 0.1≤z≤0.3); and
x+y+z= 1.

The NMC exhibits high power in a high SOC range. However, since the power is rapidly decreased in a low SOC range due to the increase in resistance, a usable SOC range may be significantly limited. The same is also true for the case in which NMC is blended with lithium manganese spinel for the safety of the cell. The reason for this is that an operating voltage of lithium manganese spinel is higher than NMC and thus, only the NMC operates alone in a low SOC range.

In order to address such limitations, a method of blending olivine-structured lithium oxide, which is not a material having a higher operating voltage than NMC such as spinel but a material having a relatively lower operating voltage than NMC, e.g., LiFePO₄ (LFP), with NMC is being studied. As a result, it may be estimated that LFP in addition to NMC may be involved in intercalation and deintercalation processes of lithium (Li) in a low SOC range, and thus, LFP may complement the low power of NMC to widen the usable SOC range and also improve safety.

However, in a case where the LFP is mixed with the NMC, another limitation may occur in which the power may decrease according to a rapid voltage drop in a transient region (although different from a blending ratio, e.g., near 30% SOC when a weight ratio of NMC to LFP is 7:3) due to the difference between operating voltages of two materials. Therefore, characteristics of LFP having excellent safety are maintained, but there is a need to modify the LFP into a form that may minimize the power reduction in a transient region occurring when the LFP is used with the layered-structure lithium transition metal oxide such as NMC.

In this respect, the present invention provides a mixed cathode active material, in which olivine-structured lithium oxide as the second cathode active material that is modified to reduce the difference in operating voltage is blended with the layered-structure first cathode active material.

The above second cathode active material is a cathode active material, in which the operating voltage is increased by substituting a portion of Fe in Fe-based olivine-structured lithium oxide with Mn or the like, wherein the rapid voltage drop in the transient region and the power reduction may be prevented by mixing an appropriate amount of the second cathode active material with the layered-structure first cathode active material.

For example, in a case where the second cathode active material is mixed with NMC, the power in a high SOC range may be somewhat lower than a case of using a cathode active material including NMC alone due to a composition ratio of NMC that is decreased as much as a fraction of the second cathode active material included.

However, with respect to a lithium secondary battery used in series-type PHEVs or EVs, a lithium secondary battery, which may maintain a predetermined power in a wider SOC range, is required rather than a lithium secondary battery exhibiting high capacity in a limited range of specific voltage. Therefore, the mixed cathode active material of the present invention and the lithium secondary battery including the same may be particularly suitable for operating devices which must maintain a predetermined power level or more without rapid power reduction over the entire SOC range, for example, series-type PHEVs or EVs. However, the use thereof is not necessarily limited thereto.

Specifically, the second cathode active material having an olivine structure according to the disclosure is represented by Chemical Formula 2 below:

[Chemical Formula 2] LiFe₁₋ₓMₓM_{y}'XO₄

where,
M is one, or two or more elements simultaneously among elements that belong to groups 7 and 9 to 12, and essentially comprises manganese (Mn);
M' is one, or two or more transition metal elements simultaneously among transition metal elements, and essentially comprises Mn;
X is one or more selected from the group consisting of P, Si, S, As, and Sb;
0<x<1 (particularly, 0.1≤x≤0.5; for example, 0.1≤x≤0.3); and
0≤y<0.5 (particularly, y=0).

In a case where a large amount of an element which increases operating voltage is included in the olivine, that is, an excessively large amount of Fe is substituted with other elements, the second cathode active material may be difficult to assist the power of the first cathode active material at a low voltage. Thus, a substitution amount, x, in Chemical Formula 2 may be in a range of 0.1≤x≤0.5, for example, 0.1≤x≤0.3.

According to an exemplary embodiment, the second cathode active material may be olivine-structured lithium phosphate represented by Chemical Formula 2a below:

[Chemical Formula 2a] LiFe₁₋ₓMₓPO₄

where,
M is one, or two or more elements simultaneously selected from the group consisting of Mn, Ni, Co, Cu, and Zn, and essentially comprises Mn; and
0<x<1 (particularly, 0.1≤x≤0.5; more particularly, 0.1≤x≤0.3).

The second cathode active material is a modified material (LMFP), in which a portion of Fe in LFP is substituted with Mn, Ni, Co, Cu, or Zn to have a higher operating voltage range, and accordingly, the difference in operating voltage with respect to NMC may be decreased to prevent the rapid power reduction in a transient region. For example, capacity is exhibited at 4.0 V due to Mn or the like and at 3.6 V due to Fe as the portion of Fe in LFP is substituted with Mn or the like, wherein when the portion of Fe is substituted with other elements such as Mn, a region due to Mn or the like is not only expressed, but an anomalous trend is also observed in which a potion of the operating voltage of Fe is also increased (e.g., 3.4 V --> 3.6 V). Therefore, the difference in operating voltage with respect to the layered-structure material, such as NMC, may be decreased, and as a result, an effect of minimizing the power reduction in a transient region may be obtained.

In this case, one or more of elements which may increase operating voltage, such as Mn, Ni, Co, Cu, and Zn, are necessarily included in the second cathode active material. In some cases, elements which rather decrease the operating voltage, such as Sc, Ti, Cr, and V, may also be included in addition to the above elements. That is, a final operating voltage of LFP may be increased to a desired level by adjusting the type and substitution amount of a substitution element.

Also, the second cathode active material may be coated with a conductive material, for example, a carbon-based material to improve conductivity.

A method of forming a mixed cathode active material by mixing the first cathode active material and the second cathode active material is not significantly limited, and various methods known in the art may be selected.

Also, the second cathode active material may be included in an amount of 5 parts by weight to 50 parts by weight, for example, 10 parts by weight to 30 parts by weight based on 100 parts by weight of the mixed cathode active material. In the case that the amount of the second cathode active material is greater than 50 parts by weight, an amount of the first cathode active material (e.g., NMC) may be relatively decreased and thus, high-capacity and high-energy lithium secondary batteries may be difficult to be obtained. In the case in which the amount of the second cathode active material is less than 5 parts by weight, the amount of the second cathode active material included may be excessively low, and thus, the objective of the present invention, such as the prevention of the power reduction in a transient region, may be difficult to be achieved or the second active material may not effectively assist the power of the first cathode active material in a low SOC range.

Furthermore, in a case where a mixed cathode material of the first cathode active material and the second active material is formed, it is necessary to consider limitations which may occur due to the difference in particle sizes or (specific) surface areas of both materials.

Specifically, it may be desirable to limit the difference in particle sizes or (specific) surface areas of two or more cathode active materials that are mixed in the present invention or use an appropriate conductive system in consideration of this. Since a conductive agent may be uniformly distributed without segregation by controlling the particle size to be uniform, the conductivity of the mixed cathode material may be further improved.

Thus, according to the present invention, an appropriate treatment may be performed on the first cathode active material and the second cathode active material so as to control the particle sizes of both materials to be similar to each other. According to an exemplary embodiment, any one cathode active material having a smaller particle size may be sintered to be agglomerated so as to have its particle size uniform with that of another cathode active material having a relatively larger particle size, and thus, secondary particles of the cathode active material may be formed.

In this case, methods of the sintering and secondary particle formation are not particularly limited and methods known in the art may be used.

Since the particle sizes and forms of the two or more cathode active materials to be mixed are made to be as uniform as possible, a phenomenon may be prevented in which a conductive agent coated on the mixed cathode active material is concentrated on any one cathode active material having a high (specific) surface area and thus, conductivity of another cathode active material, in which a relatively smaller amount of the conductive agent is distributed, is significantly decreased. As a result, the conductivity of the mixed cathode active material may be significantly improved.

In order to decrease the difference between the particle sizes or specific surface areas of the two or more cathode active materials to be mixed, a method of forming a cathode active material having a relatively smaller particle size as larger secondary particles as described above, a method of forming a cathode active material having a relatively larger particle size as smaller particles, or a method of simultaneously using both methods may be used.

Next, the mixed cathode active material may include two or more conductive agents having different particle sizes or shapes. A method of including conductive agents is not significantly limited and a typical method known in the art, such as coating of the cathode active material, may be used. As described above, this is for preventing the phenomenon, in which the conductive agent is concentrated on any one cathode active material due to the particle size difference between the cathode active materials to be mixed. According to an exemplary embodiment of the present invention, graphite and conductive carbon may be simultaneously used as the conductive agent.

Since the mixed cathode active material is coated simultaneously with graphite and conductive carbon having different particle sizes or shapes as the conductive agent, the conductivity reduction or low power of the entire cathode active material due to the difference between the particle sizes or surface areas of the first cathode active material and the second cathode active material may be more effectively improved. Simultaneously, a high-capacity mixed cathode active material having a wide available SOC range may be provided.

The graphite and conductive carbon are not particularly limited so long as they have excellent electrical conductivity and do not cause a side reaction in the inner environment of the lithium secondary battery or chemical changes in the present battery as well as having electrical conductivity.

Specifically, nature graphite or artificial graphite may be used without limitation as the graphite. A carbon-based material having high electrical conductivity may be particularly used as the conductive carbon, and specifically, one or a mixture of two or more selected from the group consisting of carbon black, such as carbon black, acetylene black, Ketjen black, channel black, furnace black, lamp black, or thermal black, and a material having a crystal structure of graphene or graphite may use as the conductive carbon. In some cases, a conductive polymer having high electrical conductivity may be used.

Herein, the conductive agent formed of the graphite and the conductive carbon may be included in an amount of 0.5 to 15 parts by weight based on 100 parts by weight of the mixed cathode material. When the amount of the conductive agent is too low, as less than 0.5 parts by weight, the above-described effects may not be expected, and when the amount of the conductive agent is too high, as greater than 15 parts by weight, high capacity or high energy density may not be obtained due to the relatively less amount of the cathode active material.

In this case, the conductive carbon may be included in an amount of 1 to 13 parts by weight, and for example, may be included in an amount of 3 to 10 parts by weight based on 100 parts by weight of the mixed cathode material.

Furthermore, in addition to the first cathode active material and the second cathode active material, the mixed cathode active material may further include one or more selected from the group consisting of lithium cobalt oxide, lithium nickel oxide, lithium manganese oxide, lithium cobalt-nickel oxide, lithium cobalt-manganese oxide, lithium manganese-nickel oxide, lithium cobalt-nickel-manganese oxide, and oxides having other elements substituted or doped therein. The other elements may be one or more selected from the group consisting of Al, Mg, Mn, Ni, Co, Fe, Cr, V, Ti, Cu, B, Ca, Zn, Zr, Nb, Mo, Sr, Sb, W, and Bi.

In this case, the lithium-containing metal oxide may be included in an amount of 50 parts by weight or less based on 100 parts by weight of the mixed cathode active material.

The present invention relates to a cathode having a current collector coated with the mixed cathode material, and a lithium secondary battery including the cathode.

In general, a lithium secondary battery is composed of a cathode including a cathode material and a current collector, an anode including an anode material and a current collector, and a separator that may block electrical contact between the cathode and the anode and may conduct lithium ions. An electrolyte solution for the conduction of lithium ions is included in voids of electrode and separator materials.

The cathode and the anode are generally prepared by coating the current collector with a mixture of electrode active material, conductive agent, and binder, and then drying the coated collector. A filler may be further added to the mixture if necessary.

The lithium secondary battery of the present invention may be prepared according to a typical method known in the art. Specifically, the lithium secondary battery may be prepared by inserting a porous separator between the cathode and the anode, and introducing a non-aqueous electrolyte solution.

Also, the lithium secondary battery of the present invention may limit power variation in a specific SOC range within a predetermined range in order to maintain stable power and improve safety in a low SOC range.

For example, power of the lithium secondary battery in a SOC range of 10% to 40% may be 40% or more of power at 50% SOC and specifically, may be 50% or more of the power at 50% SOC.

As another example, a ratio of power at 30% SOC to power at 50% SOC of the lithium secondary battery may be in a range of 0.4 to 1, for example, 0.5 to 1.

Since the substituted LFP (LMFP) is used, the difference between operating voltages of two materials may be decreased in comparison to a case in which a rapid voltage drop may occur in a transient region due to the difference between operating voltages of two materials during blending of the layered-structure lithium transition metal oxide and the pure LFP. As a result, the mixed cathode active material according to the present invention, the cathode, and the lithium secondary battery may have effects in which the power reduction in a transient region is minimized and the power in a low SOC range may be stably maintained.

Hereinafter, the present invention will be described in detail, according to specific examples.

### Example

### Preparation of Cathode

A slurry was prepared by adding 90 wt% of a mixture composed of LiNi_{0.5}Mn_{0.3}Co_{0,2}O₂(70 wt%) and LiMn_{0.5}Fe_{0.5}PO₄ (30 wt%) as a cathode active material, 5 wt% of Denka black as a conductive agent, and 5 wt% of polyvinylidene fluoride (PVDF) as a binder to N-methylpyrrolidone (NMP). An aluminum (Al) foil as a cathode current collector was coated with the slurry, and the coated Al foil was then rolled and dried to prepare a cathode for a lithium secondary battery.

### Preparation of Lithium Secondary Battery

A porous polyethylene separator was disposed between the cathode thus prepared and a graphite-based anode, and a lithium electrolyte solution was injected to prepare a polymer-type lithium secondary battery.

The polymer-type lithium secondary battery was subjected to formation at 4.6 V, and power was then measured according to SOC while the polymer-type lithium secondary battery was charged and discharged between 2 V and 4.5 V (Crate = 1C).

### Comparative Example

A polymer-type lithium secondary battery was prepared in the same manner as in Example except that LiFePO₄ was used instead of LiMn_{0.5}Fe_{0.5}PO₄ as a second cathode active material.

### Experimental Example

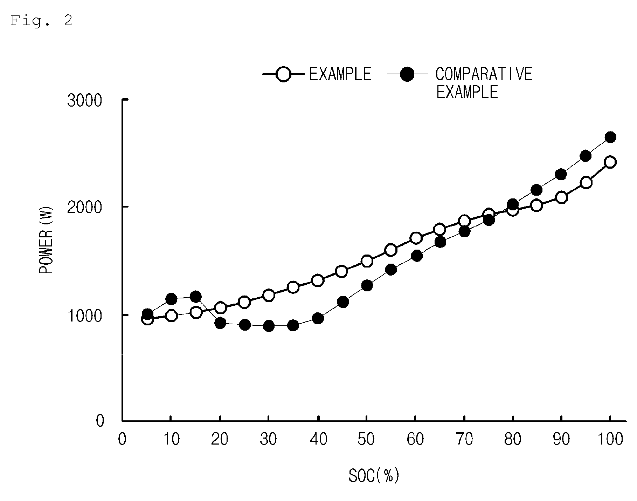

Changes in power according to SOC were measured for the full cell lithium secondary batteries prepared according to Example and Comparative Example, and the results thereof are presented in FIG. 2.

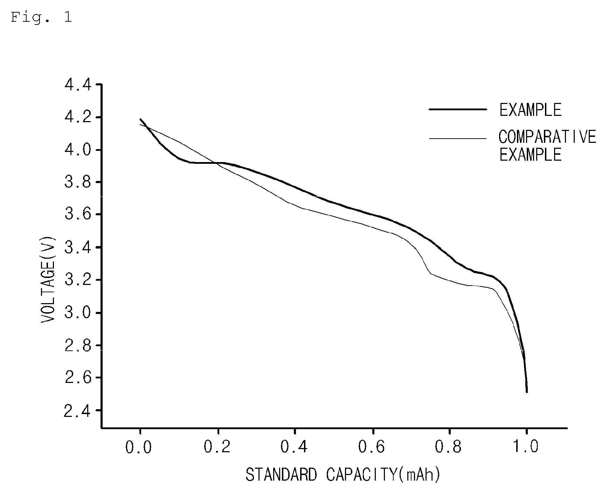

Referring to FIG. 2, Example exhibited stable power characteristics without rapid power reduction in the most range of SOC in comparison to Comparative Example. Also, referring to FIG. 1, with respect to Example, it may be understood that a rapid voltage drop in a transient region was prevented, different from Comparative Example.

(Since the data shown in FIGS. 1 and 2 are merely exemplary and detailed resistance (or power) values according to SOC may vary according to the specification of each cell, tendencies of the graphs may be more important than the detailed values.)

Eventually, since the mixed cathode active material of layered-structure lithium transition metal oxide (e.g., NMC) and LFP modified (substituted) to decrease the difference in operating voltage with respect to the layered-structure lithium transition metal oxide (LMFP) was used, the lithium secondary battery according to the present invention may secure safety and may assist the power in a low SOC range. Furthermore, it may be confirmed that power characteristics of the cell may be significantly improved by minimizing the power reduction in a transient region occurring due to the blending.

### INDUSTRIAL APPLICABILITY

A mixed cathode active material according to the present invention is prepared by mixing a first cathode active material, as layered-structure lithium transition metal oxide (e.g., NMC), and a second cathode active material (also referred to as "LMFP") in which a portion of Fe in pure LFP is substituted with other elements such as Mn, wherein since the substituted LFP is used, the difference between operating voltages of two materials may be decreased in comparison to a case in which a rapid voltage drop may occur in a transient region due to the difference between operating voltages of two materials during blending of the layered-structure lithium transition metal oxide and the pure LFP. As a result, the present invention may provide a lithium secondary battery in which the power reduction in a transient region is minimized.

## Claims

1. A mixed cathode active material comprising:
a first cathode active material as layered-structure ternary lithium-containing metal oxide represented by Chemical Formula 1; and
a second cathode active material as olivine-structured lithium phosphate represented by Chemical Formula 2a,
wherein the second cathode active material is included in an amount of 5 parts by weight to 50 parts by weight based on 100 parts by weight of the mixed cathode active material,
[Chemical Formula 1] Li₁₊ₐNiₓMn_{y}Co_{z}O₂
where, 0≤a≤0.2;
0.4≤x≤0.6;
0.2≤y≤0.5;
0.1 ≤z≤0.3; and
x+y+z= 1,
[Chemical Formula 2a] LiFe₁₋ₓMnₓPO₄
where, 0.1≤x≤0.5.

2. The mixed cathode active material of claim 1, wherein, in Chemical Formula 2a, 0.1≤x≤0.3.

3. The mixed cathode active material of claim 1, further comprising a conductive agent in addition to the first cathode active material and the second cathode active material.

4. The mixed cathode active material of claim 3, wherein the conductive agent comprises conductive carbon.

5. The mixed cathode active material of claim 3, wherein the conductive agent is included in an amount of 0.5 parts by weight to 15 parts by weight based on 100 parts by weight of the mixed cathode active material.

6. The mixed cathode active material of claim 4, wherein the conductive carbon is one or a mixture of two or more selected from the group consisting of carbon black, acetylene black, Ketjen black, channel black, furnace black, lamp black, thermal black, and a material having a crystal structure of graphene or graphite.

7. A cathode comprising the mixed cathode active material of claim 1.

8. A lithium secondary battery comprising the cathode of claim 7.

9. The lithium secondary battery of claim 8, wherein the lithium secondary battery is used in a series-type plug-in hybrid electric vehicle (PHEV).

## Patentansprüche

1. Mischkathodenaktivmaterial, welches umfasst:
ein erstes Kathodenaktivmaterial als Schicht-strukturiertes, ternäres, Lithiumenthaltendes Metalloxid, dargestellt durch Chemische Formel 1; und
ein zweites Kathodenaktivmaterial als Olivin-strukturiertes Lithiumphosphat, dargestellt durch Chemische Formel 2a,
wobei das zweite Kathodenaktivmaterial in einer Menge von 5 Gewichtsteilen bis 50 Gewichtsteilen, basierend auf 100 Gewichtsteilen des Mischkathodenaktivmaterials, eingeschlossen ist,
[Chemische Formel 1] Li₁₊ₐNiₓMn_{y}Co_{z}O₂
wobei 0≤a≤0,2;
0,4≤x≤0,6;
0,2≤y≤0,5;
0,1≤z≤0,3; und
x+y+z=1 ist,
[Chemische Formel 2a] LiFe₁₋ₓMnₓPO₄
wobei 0,1≤x≤0,5 ist.

2. Mischkathodenaktivmaterial nach Anspruch 1, wobei in Chemischer Formel 2a 0,1≤x≤0,3 ist.

3. Mischkathodenaktivmaterial nach Anspruch 1, weiter umfassend ein Leitfähigkeitsmittel zusätzlich zu dem ersten Kathodenaktivmaterial und dem zweiten Kathodenaktivmaterial.

4. Mischkathodenaktivmaterial nach Anspruch 3, wobei das Leitfähigkeitsmittel leitfähigen Kohlenstoff umfasst.

5. Mischkathodenaktivmaterial nach Anspruch 3, wobei das Leitfähigkeitsmittel in einer Menge von 0,5 bis 15 Gewichtsteilen, basierend auf 100 Gewichtsteilen des Mischkathodenaktivmaterials, eingeschlossen ist.

6. Mischkathodenaktivmaterial nach Anspruch 4, wobei der leitfähige Kohlenstoff einer oder eine Mischung aus zwei oder mehreren ist, die ausgewählt sind aus der Gruppe bestehend aus Kohlenstoffruß, Acetylenruß, Ketjen-Ruß, Kanalruß, Ofenruß, Lampenruß, thermischem Ruß und einem Material mit einer Kristallstruktur aus Graphen oder Graphit.

7. Kathode umfassend das Mischkathodenaktivmaterial nach Anspruch 1.

8. Lithiumsekundärbatterie umfassend die Kathode nach Anspruch 7.

9. Lithiumsekundärbatterie nach Anspruch 8, wobei die Lithiumsekundärbatterie in einem serienartigen Plug-in-Hybridelektrofahrzeug (PHEV) verwendet wird.

## Revendications

1. Matériau actif composite de cathode comprenant :
un premier matériau actif de cathode constitué d'un oxyde métallique contenant du lithium ternaire de structure en couches représenté par la Formule chimique 1 ; et
un second matériau actif de cathode constitué de phosphate de lithium de structure olivine représentée par la Formule chimique 2a,
dans lequel le second matériau actif de cathode est présent en une quantité de 5 parties en poids à 50 parties en poids par rapport à 100 parties en poids du matériau actif composite de cathode,
[Formule chimique 1] Li₁₊ₐNiₓMn_{y}Co_{z}O₂
où, 0 ≤ a ≤ 0,2 ;
0,4 ≤ x ≤ 0,6 ;
0,2 ≤ y ≤ 0,5 ;
0,1 ≤ z ≤ 0,3 ; et
x + y + z = 1,
[Formule chimique 2a] LiFe₁₋ₓMnₓPO₄
où, 0,1 ≤ x ≤ 0,5.

2. Matériau actif composite de cathode de la revendication 1, dans lequel, dans la Formule chimique 2a, 0,1 ≤ x ≤ 0,3.

3. Matériau actif composite de cathode de la revendication 1, comprenant en outre un agent conducteur en complément du premier matériau actif de cathode et du second matériau actif de cathode.

4. Matériau actif composite de cathode de la revendication 3, dans lequel l'agent conducteur comprend du carbone conducteur.

5. Matériau actif composite de cathode de la revendication 3, dans lequel l'agent conducteur est présent en une quantité de 0,5 parties en poids à 15 parties en poids par rapport à 100 parties en poids du matériau actif composite de cathode.

6. Matériau actif composite de cathode de la revendication 4, dans lequel le carbone conducteur est un élément ou un mélange de deux éléments ou plus sélectionnés dans le groupe constitué de noir de carbone, de noir d'acétylène, de noir de Ketjen, de noir de tunnel, de noir de four, de noir de fumée, de noir thermique et d'un matériau ayant une structure cristalline composée de graphène ou de graphite.

7. Cathode comprenant le matériau actif composite de cathode de la revendication 1.

8. Batterie secondaire au lithium comprenant la cathode de la revendication 7.

9. Batterie secondaire au lithium de la revendication 8, dans laquelle la batterie secondaire au lithium est utilisée dans un véhicule électrique hybride rechargeable (VEHR) fonctionnant en mode série.
